# EUROPEAN PATENT APPLICATION

(11) **EP 2 352 080 A2**
(43) Date of publication of application: **03.08.2011**
(21) Application number: 09829269.1
(22) Date of filing: 03.11.2009
(51) Int. Cl.: G06F 3/048, G06F 3/042, H03M 11/10

(54) **TERMINAL APPARATUS WITH POINTING DEVICE AND CONTROL METHOD OF SCREEN**

(30) Priority: 03.11.2008 KR 20080108418
(71) Applicant: Crucialtec Co., Ltd., Chungcheongnam-do 336-795 (KR)
(72) Inventor: AHN, Keon Joon, Seongnam-si Gyeonggi-do 463-772 (KR)
(74) Representative: Delorme, Nicolas
(86) International application number: PCT/KR2009/006432
(87) International publication number: WO 2010/062062

(57) **Abstract**

By a control method of a screen of a terminal apparatus with a pointing device according to an embodiment of the present invention, a pressing operation of a user's finger for selecting a predetermined function displayed on a screen is sensed. At this time, it is determined whether the pressing operation is temporary or is continued for a predetermined time. When the pressing operation is temporary, the pressing operation is determined as an easy click operation, such that a function linked to a region where a cursor or a pointer is positioned is implemented on the screen. Further, when the pressing operation is continued for the predetermined time, the previously set control function is implemented on the screen by determining the pressing operation as the easy press operation.

## Description

### [Technical Field]

The present invention relates to a terminal apparatus with a pointing device, and a control method of a screen. More particularly, the present invention relates to a terminal apparatus with a pointing device controlling a screen by moving a cursor or a pointer on the screen through movement of a user's fingers, and a method of controlling the screen by using the pointing device.

### [Background Art]

In general, various electronic apparatuses are being manufactured through development of telecommunication technologies, and the apparatuses have a gradual tendency to emphasize graceful design in addition operational convenience. Diversification of an input apparatus represented as a keyboard or a keypad is emphasized depending on such a tendency.

Further, since various functions of a portable electronic apparatus are integrated on one apparatus, setting various menus is required to use the functions depending on operation modes of the portable electronic apparatus. For example, searching and selecting a counterparty's phone number or a file to be transmitted are required in a communication mode, searching a multimedia file, operations such as play/stop, pause, etc., and wireless Internet access are required in a multimedia mode, and a mouse function or a zoom function is required in a camera mode. Further, a function for basic set-up of the portable electronic apparatus itself, menu calling, or the like, is required.

Further, since an advanced high-speed mobile communication technology such as the high speed downlink packet access (HSDPA), which is a 3.5-generation mobile communication, and the WiBro, which is the portable Internet, has been recently commercialized, a concern of full browsing is increased. Although a web page for a personal computer (PC) may be displayed on a portable terminal, it is not easy to implement the Internet screen for the PC on a small screen of the portable terminal as it is. In particular, it is further difficult to control the Internet screen.

However, in the related art, since the menus need to be searched and selected several times by alternatively coming from and going to upper menus and lower menus in order to select necessary functions, there is a problem in that operational efficiency is deteriorated. Particularly, when the known menu selecting method is applied to a full browsing screen, it is very inconvenient to control the screen.

Meanwhile, in the known portable terminal using a touch screen, a user can select functions relating to menus or icons by just touching the menus or icons displayed on a screen of the portable terminal with his fingers, but a user interface environment depending on user's various operations cannot be provided.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

The present invention has been made in an effort to provide a terminal apparatus with a pointing device, which provides a user interface capable of efficiently controlling a screen in a state where movement of a user's fingers stops, and a control method of the screen.

### [Technical Solution]

An exemplary embodiment of the present invention provides a control method of a screen. The control method of a screen of a terminal apparatus with a pointing device generating and moving a cursor (alternatively, a pointer) on the screen through movement of a user's finger includes sensing a pressing operation of the user's finger for selecting a predetermined function displayed on the screen; determining whether or not the pressing operation is temporary or is continued for a predetermined time; implementing a function linked to a region where the cursor or pointer is positioned by determining the pressing operation as an easy click operation when the pressing operation is temporary on the screen; and implementing a previously set control function by determining the pressing operation as an easy press operation when the pressing operation is continued for the predetermined time on the screen.

Another embodiment of the present invention provides a terminal apparatus with a pointing device. This terminal apparatus includes: a display unit that displays a cursor or a pointer on a screen and outputs information depending on an operation of the terminal apparatus on the screen; a pointing device that generates or moves the cursor (alternatively, a pointer) on the screen through movement of a user's finger; and a control unit that senses a pressing operation of the user's finger for controlling a function displayed on the screen through the pointing device and determines whether the pressing operation is temporary or is continued for a predetermined time, and implements a function linked to a region where the cursor or pointer is positioned on the screen by determining the pressing operation as an easy click operation when the pressing operation is temporary and previously implements a predetermined control function on the screen by determining the pressing operation as the easy press operation when the pressing operation is continued for the predetermined time.

### [Description of the Drawings]

FIG. 1 shows an external configuration of a terminal apparatus adopting a pointing device according to an embodiment of the invention.
FIG. 2 is a block diagram showing a detailed configuration of a terminal apparatus according to an embodiment of the present invention.
FIG. 3 is a graph for describing easy press or easy click according to an embodiment of the present invention.
FIG. 4 is a flowchart showing a control method of a screen according to an embodiment of the present invention.
FIG. 5 is a flowchart showing a control method of a screen according to another embodiment of the present invention.
FIG. 6 is a flowchart showing a control method of a screen by easy press according to an embodiment of the present invention.
FIG. 7 shows an initial screen in which easy press is operated while a full browsing service is being executed according to an embodiment of the present invention.
FIG. 8 shows a screen on which a pop-up menu is displayed by operating easy press while a full browsing service is being executed according to an embodiment of the present invention.
FIG. 9 shows a screen on which mode switching is executed by operating easy press while a VOD service is being executed according to an embodiment of the present invention.

### [Mode for Invention]

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In the specification, unless explicitly described to the contrary, the word "comprise" and variations such as "comprises" or "comprising" will be understood to imply the inclusion of stated elements but not the exclusion of any other elements.

Hereinafter, a terminal apparatus with a pointing device and a control method of a user interface according to an embodiment of the present invention will be described in detail with reference to the accompanying drawings.

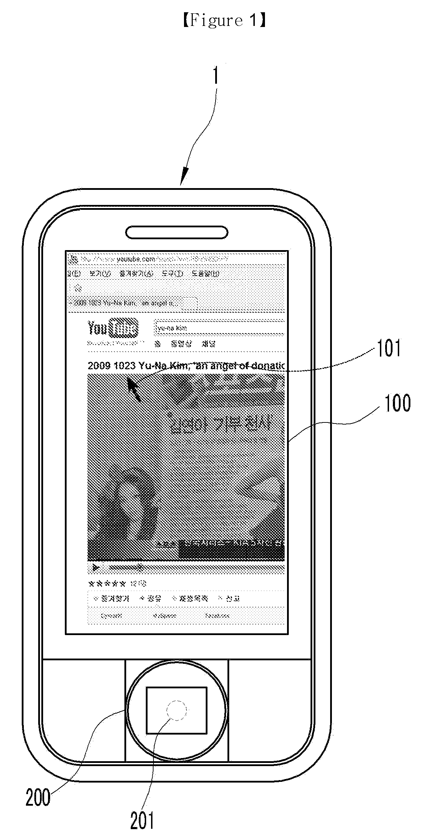

FIG. 1 shows an external configuration of a terminal apparatus adopting a pointing device according to an embodiment of the invention.

Referring to FIG. 1, a portable terminal 1 is shown as the terminal apparatus, but the terminal apparatus is not limited to the portable terminal 1. The terminal apparatus includes a display unit 100 and a pointing device 200. Further, the terminal apparatus includes all electronic apparatuses that can perform wired/wireless communication and execute multimedia contents. For example, the terminal apparatus may include a notebook and an IPTV.

Herein, the display unit 100 is provided on the top of the portable terminal 1, and may adopt a liquid crystal display (LCD) which is currently being commercialized, etc.

The display unit 100 displays a cursor or a pointer 101 on a screen, and outputs information depending on an operation of the portable terminal 1 on the screen. In particular, a screen corresponding to a user interface (UI) inputted from the pointing device 200 is outputted to the outside.

The display unit 100 outputs a screen generated when the portable terminal 1 implements full browsing, video on demand (VOD), a map, regeneration of an MP3, a mail service, etc.

The pointing device 200 is a member for selecting a role of a left button of a mouse in a PC, that is, a function displayed on the screen by operating the cursor (alternatively, a pointer) on the screen outputted by the display unit 100.

The pointing device 200 implements a pointing technique in the personal computer (PC) by generating and moving the cursor (alternatively, a pointer) on the screen through movement of a finger. That is, by laying the finger on the pointing device 200 and moving the finger up and down and left and right, the cursor (alternatively, a pointer) moves depending on the movement direction.

Herein, the pointing device 200 may adopt various technologies, but for example, may adopt an optical joystick. The optical joystick is a technology that sends information on the movement of the finger to a sensor through an optical system by using light emitted from a luminescent diode (LED) 201 and converts the movement information into a coordinate value to implement the information on the screen as large as movement displacement. The optical joystick conversely uses the principle of an optical mouse. The LED is disposed downward in the optical mouse, while the LED 201 detects the movement of the finger by facing upward in the optical joystick.

Of course, the pointing device 200 may include various pointing devices including a hole sensor, a fingerprint scan sensor, and a pressure sensor in addition to the optical joystick.

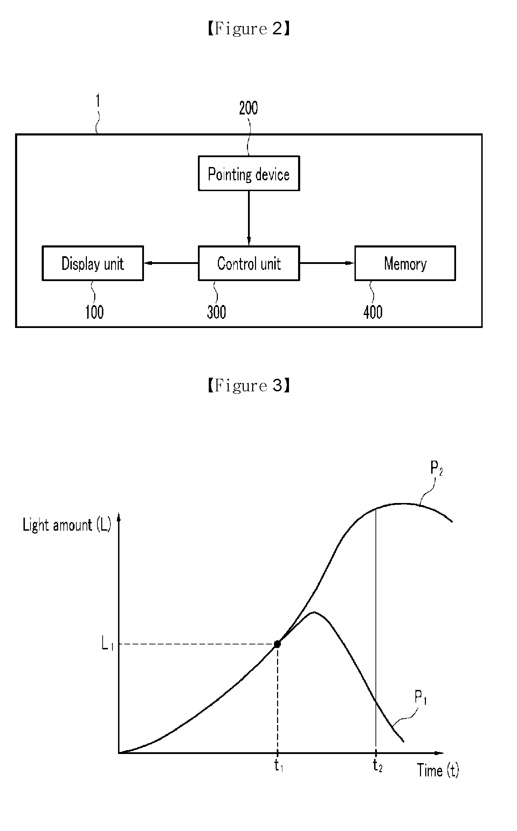

FIG. 2 is a block diagram showing a detailed configuration of a terminal apparatus according to an embodiment of the present invention.

Referring to FIG. 2, the terminal apparatus 1 includes a display unit 100, a pointing device 200, a controller 300, and a memory 400.

Herein, the pointing device 200 can sense physical contact of a user's finger or sense light reflected on the user's finger. Therefore, the controller 300 performs different operations. Functions of constituent members will hereinafter be described by dividing an embodiment in which the pointing device 200 senses the physical contact and an embodiment in which the pointing device 200 collects the light reflected by the user's finger.

First, according to one embodiment, when the pointing device 200 senses the physical contact of the user's finger, the pointing device 200 generates a contact sensing signal. At this time, a member that the pointing device 200 uses for sensing the physical contact can be implemented through a touch pad or a doom switch.

When the controller 300 receives the contact sensing signal from the pointing device 200, the controller 300 reads the movement of the user's finger. When the controller 300 receives the contact sensing signal from the pointing device 200, the controller 300 recognizes the signal as a pressing operation for the user to select a predetermined function and counts a contact time T.

Herein, the pressing operation means an operation for the user to press the pointing device 200 in order to select the function with the finger. The controller 300 controls the screen so as to execute the corresponding function depending on the pressing operation, and outputs the determined screen through the display unit 100.

The memory 400 stores and provides an effective operation of a user interface depending on a result of reading the contact sensing signal and screen control information depending thereon to the controller 300.

Meanwhile, according to another embodiment, when the pointing device 200 collects light reflected by the user's finger by irradiating the light to the adjacent user's finger, the pointing device 200 generates and outputs the light sensing signal.

When the controller 300 receives the light sensing signal from the pointing device 200, the controller calculates the amount of the collected light, that is, the light amount.

The controller 300 determines whether or not the operation of the user interface is effective by using the light sensing signal and the light amount. That is, the controller 300 recognizes the light sensing signal as a pressing operation for the user to select a predetermined function when the calculated light amount is equal to or more than a predetermined threshold value. In addition, the controller 300 controls the screen so as to execute the corresponding function depending on the pressing operation, and outputs the determined screen through the display unit 100.

The memory 400 stores and provides an effective operation of a user interface depending on a result of reading the light sensing signal and the light amount and control information depending thereon to the controller 300.

The pressing operation for the user to select a predetermined function in the user interface using the above-mentioned pointing device 200 includes easy press and easy click.

Herein, the easy press implements a screen control function for a service screen that is being currently executed. At this time, the screen control function is defined in advance by a terminal developer.

The screen control function includes a plurality of additional menu items suitable for a currently activated mobile service category. Further, the screen control function includes a function to switch the screen control mode of the mobile service category that is currently being executed.

In addition, the easy click executes or selects a function linked to a point where the cursor (alternatively, a pointer) is located. For example, the easy click performs the same function as "left-button click" in a PC mouse.

At this time, the easy click represents a temporary pressing operation state, while the easy press represents a continuous pressing operation state.

Hereinafter, the easy press and the easy click according to the embodiment when the pointing device 200 senses the physical contact of the user's finger will be described in Table 1.

**(Table 1)**

| Item | Easy Press | Easy Click |
|---|---|---|
| Region | All regions | Activation region |
| Time | Contact time (T) = t | Contact time (T) < t |

As shown in Table 1, the easy press operates all regions irrespective of an activation region and an inactivation region, while the easy click operates only the activation region. Herein, the activation region as a point or a section linked to a predetermined function may include a region where a moving picture is expressed. The cursor (alternatively, a pointer) gets near to the corresponding region, which is highlighted, such that the activation region is discriminated from the inactivation region.

Further, the easy press operates when a contact time T is equal to or more than a predetermined time threshold value t, while the easy click operates when the contact time T is less than the predetermined time threshold value t.

Herein, the contact time T and the predetermined time threshold value t is expressed by a unit of seconds, for example, the predetermined time threshold value t may be "1 second".

Meanwhile, the easy press and the easy click according to the embodiment when the pointing device 200 senses the light reflected on the user's finger will be described in Table 2.

**(Table 2)**

| Item | Easy Press | Easy Click |
|---|---|---|
| Region | All regions | Activation region |
| Light amount | Light amount (L) = L₁ | Light amount (L) = L₁ |
| Time | T > t₂ | t₂ > T > t₁ |

As shown in Table 2, the easy press is implemented in all the regions, while the easy click is limited to only the activation region.

Further, the easy press and the easy click are discriminated from each other according to the light amount and the time, and will be described in detail with reference to FIG. 3.

FIG. 3 is a graph for describing easy press or easy click according to an embodiment of the present invention.

Referring to FIG. 3, when the light amount L is more than a predetermined threshold value L₁, this case is recognized as the pressing operation for the user to select a predetermined function, and is determined as the easy click or easy press operation.

At this time, when the light amount decreases between a time t₁ when the light amount L is more than the light amount threshold value L₁ and a predetermined threshold time t₂, this case is recognized as the temporary pressing operation state and is determined as the easy click P₁.

In addition, when the light amount continuously increases or is constantly maintained up to the predetermined threshold time t₂, this case is recognized as the continuous pressing operation state and is determined as the easy press P₂.

Herein, the exceeding time t₁ and the predetermined threshold time t₂ are expressed by a second time, and for example, the predetermined time threshold value t may be "1 second".

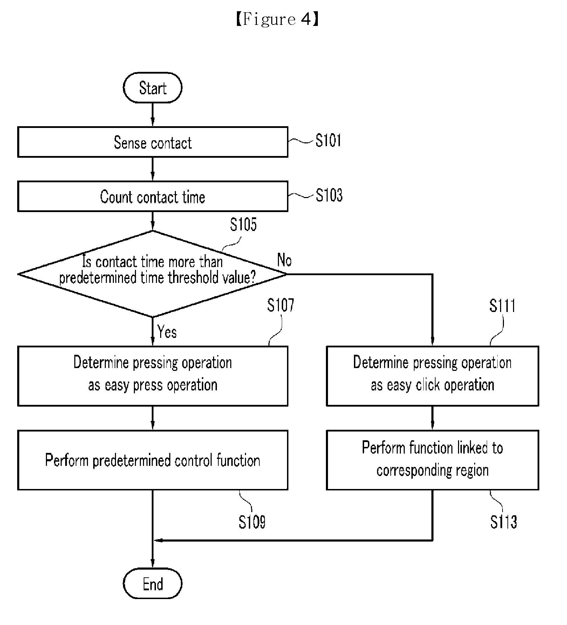

Hereinafter, referring to FIGS. 4 to 6, a control method of the screen depending on the easy press and easy click operations will be described.

First, FIG. 4 is a flowchart showing a control method of a screen according to an embodiment of the present invention, and shows a control method of a screen depending on an operation of the pointing device 200 of FIG. 2.

Referring to FIG. 4, when the pointing device 200 senses contact of a user's finger (S101), a controller 300 counts a contact time T from a time of sensing the contact (S 103).

The controller 300 determines whether or not the contact time T is more than a predetermined time threshold value t (S105).

When the contact time T is more than the predetermined time threshold value t, this case is recognized as a case where the contact of the user's finger is continued for a predetermined time, and is determined as an easy press operation (S107). Therefore, the controller 300 performs a predetermined screen control function (S109).

Meanwhile, when the contact time T is not more than the predetermined time threshold value t, this case is recognized as a case where the contact of the user's finger is temporary, and is determined as an easy click operation (S111). Therefore, the controller 300 executes a function linked to a region where the easy click is activated as a control function (S113).

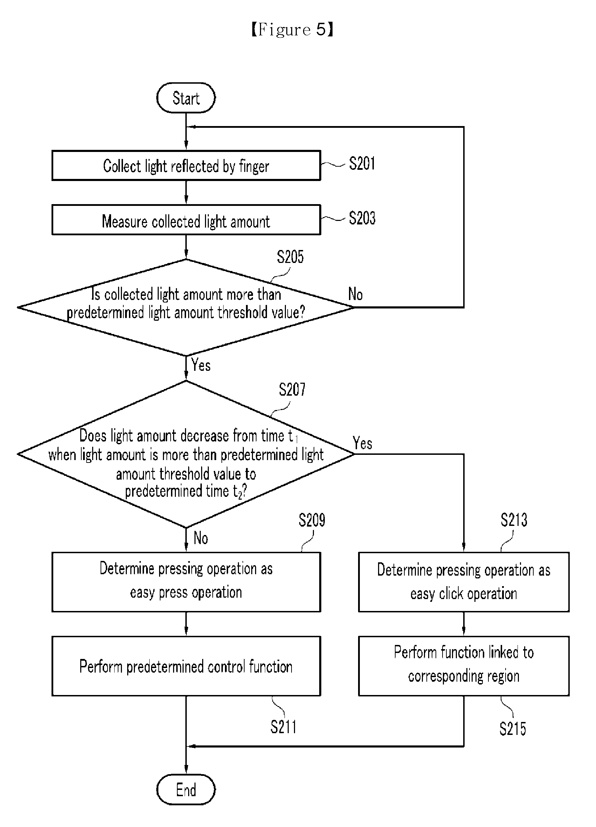

FIG. 5 is a flowchart showing a control method of a screen according to another embodiment of the present invention, and shows a control method of a screen depending on an operation of the pointing device 200 of FIG. 3.

Referring to FIG. 5, when the pointing device 200 collects light reflected by the user's finger (S201), the controller 300 measures the amount of light that the pointing device 200 collects, that is, the light amount (S203).

The controller 300 determines whether or not the measured light amount L is more than a predetermined light amount threshold value L₁ (S205). When the light amount L is not more than the predetermined light amount threshold value L₁, the process returns to step S201.

However, when the light amount is more than the predetermined light amount threshold value, the controller 300 determines whether or not the light amount L decreases between a time t₁ when the light amount L is more than the light amount threshold value L₁ and a predetermined threshold time t₂ (S207).

When the light amount is constant or increases without a decrease, the controller 300 recognizes this case as a continuous state of a pressing operation performed by drawing the user's finger near the pointing device 200, and is determined as the easy press operation (S209). Therefore, the controller 300 performs a predetermined control function (S211).

However, when the light amount decreases, the controller 300 recognizes this case as a temporary state of the pressing operation performed by drawing the user's finger near the pointing device 200, and is determined as the easy click operation (S213). Therefore, the controller 300 executes a function linked to a region where the easy click is activated as a control function (S215).

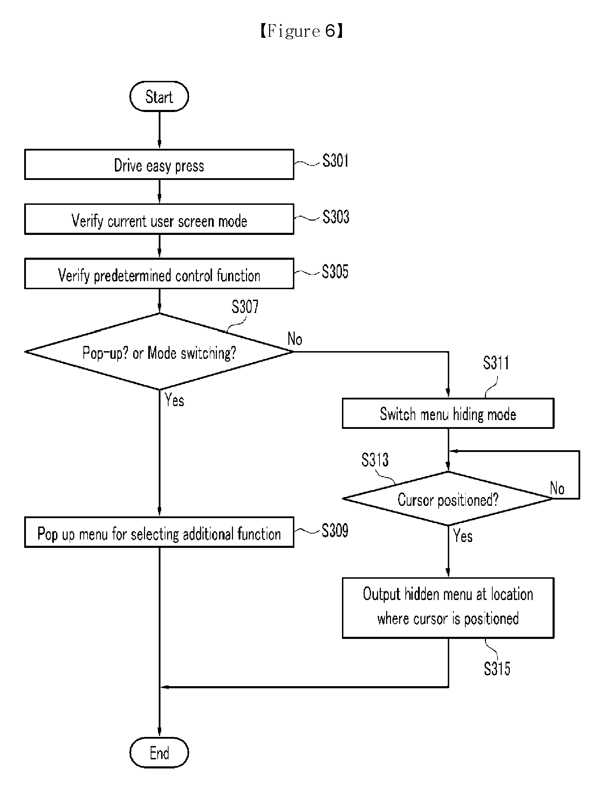

FIG. 6 is a flowchart showing a control method of a screen by easy press according to an embodiment of the present invention.

At this time, a control function provided according to the easy press includes "additional menu item" and "mode switching", but the control function is not limited thereto and various embodiments are available.

Referring to FIG. 6, when the controller 300 determines the easy press operation, the controller 300 starts the resultant operation control (S301).

The controller 300 verifies a current user screen mode outputted through the display unit 100 (S303). In addition, the controller 300 verifies a control function set in the current user screen mode (S305).

The controller 300 determines whether the control function is set to a menu pop-up or mode switching according to the verification result at step S305 (S307).

When the control function is set to the menu pop-up mode, an additional menu item for selecting an additional function pops up in the current user screen mode (S309). At this time, the additional menu item may be a favorite item that the user sets in advance. The favorite item includes a menu item frequently used among a plurality of menu items implemented in a portable terminal 1.

Herein, the pop-up menu includes a flying menu or a rolling menu. The user may select the menu item by vertically scrolling the additional menu item.

The additional menu item may include a zoom mode item, an expansion mode item, a scroll mode item, a multimedia message service (MMS) mode item, and a dynamic zoom mode item.

The zoom mode item provides a zoom-in/zoom-out function by horizontally sweeping the finger. That is, when the finger is swept left, zoom-out occurs and when the finger is swept right, zoom-in occurs. Herein, the sweeping represents an operation of horizontally slipping the finger.

The expansion mode item provides a function of expanding characters or images at a point where a cursor (alternatively, a pointer) is located.

The scroll mode item provides a function of moving to a predetermined location on the screen. That is, by moving the finger in a desired direction in the pointing device 200, the scroll mode item provides a function of outputting a screen corresponding to the direction.

The MMS mode item provides a function of transmitting moving pictures, photographs, and music files.

The dynamic zoom mode item provides a function of expanding a character string at the point where the cursor (alternatively, a pointer) is located, and outputting the character string that flows from the right to the left.

Meanwhile, when the control function is set to the mode switching according to the determination result at step S307, a mode switching function suitable for the current user screen mode is executed. Herein, the mode switching represents switching the current outputted screen form into a predetermined screen having a different form. For example, a menu hiding mode in which a menu displayed on the screen is hidden may be included.

While operating in the menu hiding mode (S311), it is determined whether the cursor is located at a point where the menu is outputted before the mode switching (S313).

When the cursor is located at the point, the corresponding hidden menu, that is, the menu outputted before the mode switching, is outputted (S315).

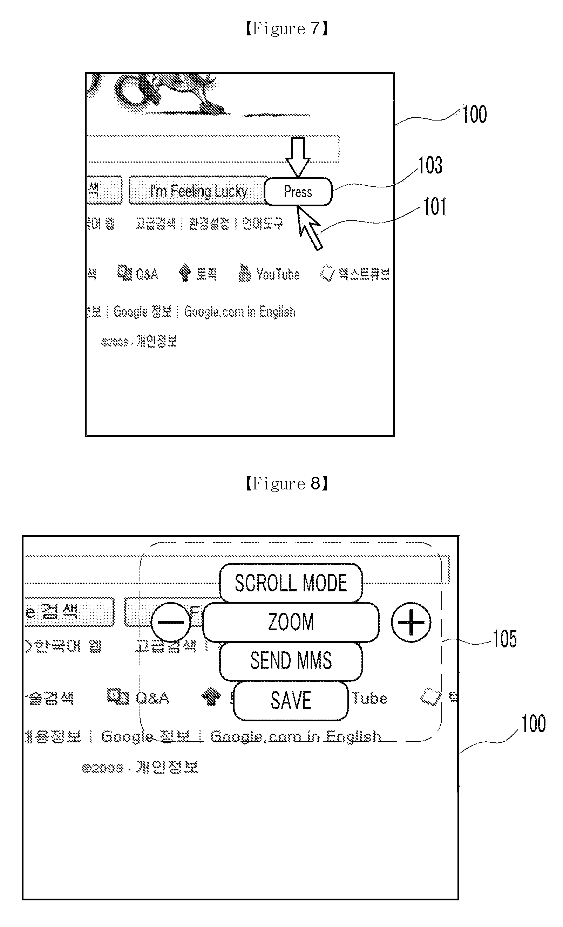

Further, FIGS. 7 to 9 show a configuration of a screen by an easy press operation.

First, FIG. 7 shows an initial screen in which easy press is operated while a full browsing service is being executed according to an embodiment of the present invention.

Referring to FIG. 7, a display unit 100 expresses an icon 103 indicating that easy press is driven when a pointing device 200 recognizes a pressing operation using a user's finger at a point where a cursor (alternatively, a pointer) 101 is located. Herein the icon is configured by a character "Press" and an arrow shape.

FIG. 8 shows a screen on which a pop-up menu is displayed by operating easy press while a full browsing service is being executed according to an embodiment of the present invention.

Referring to FIG. 8, the display unit 100 expresses the icon 103 of FIG. 8, and thereafter, pops up an additional menu item 105. The additional menu item 105 is constituted by a rolling menu and a horizontal sweeping menu.

In the case of the rolling menu, when the user vertically moves his/her finger, the scroll function is activated such that the menus are sequentially activated. In the case of the horizontal sweeping menu, when the user horizontally moves his/her finger, zoom-in or zoom-out occurs, or when a sound source file is regenerated, volume is controlled.

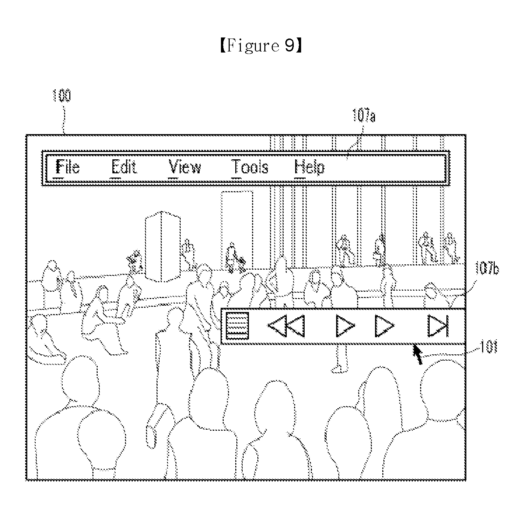

FIG. 9 shows a screen on which mode switching is executed by operating easy press while a VOD service is being executed according to an embodiment of the present invention.

Referring to FIG. 9, a case in which a mode is switched into the menu hiding mode by operating the easy press while a movie file is regenerated is shown.

At this time, before the easy press operates, a menu relating to controlling a VOD program is outputted at the upper side of the screen and a menu relating to regeneration of a file is outputted at the right side of the screen.

When the easy press operates, the mode is switched into the menu hiding mode, such that the menus at the upper and lower sides of the screen disappear. Herein, the "menu hiding" includes a state in which the menu moves to outside of the VOD regeneration screen and is not shown on the screen.

At this time, when the cursor (alternatively, a pointer) 101 gets near the upper side, a hidden menu 107a is outputted. Further, when the cursor (alternatively, a pointer) 101 gets near the right side of the screen, a hidden menu 107b is outputted.

The above-mentioned exemplary embodiments of the present invention are not embodied only by an apparatus and/or method. Alternatively, the above-mentioned exemplary embodiments may be embodied by a program performing functions that correspond to the configuration of the exemplary embodiments of the present invention, or a recording medium on which the program is recorded, etc.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

According to an embodiment of the present invention, it is possible to rapidly and conveniently search a menu item having a function that a user wants to use through a simple operation using a pointing device.

## Claims

1. A control method of a screen of a terminal apparatus with a pointing device generating and moving a cursor (alternatively, a pointer) on the screen through movement of a user's finger, comprising:
sensing a pressing operation of the user's finger for selecting a predetermined function displayed on the screen;
determining whether or not the pressing operation is temporary or is continued for a predetermined time;
implementing a function linked to a region where the cursor or pointer is positioned by determining the pressing operation as an easy click operation when the pressing operation is temporary on the screen; and
implementing a previously set control function by determining the pressing operation as an easy press operation when the pressing operation is continued for the predetermined time on the screen.

2. The control method of claim 1, wherein
previously implementing the predetermined control function on the screen includes
outputting a plurality of additional menu items corresponding to a category of a currently activated service screen or switching a mode of the service screen.

3. The control method of claim 2, wherein
the additional menu item includes
a favorite menu including one or more menus that a user frequently uses.

4. The control method of claim 2, wherein
the additional menu item includes
one or more menu items selectable through vertical scrolling and one or more menu items selectable through horizontal sweeping.

5. The control method of claim 2, wherein,
in implementing the previously set control function on the screen,
one or more items for controlling the currently activated service displayed on the screen are switched into a hiding mode, and when the cursor or pointer gets near to the menu items, a hidden menu item is displayed on the screen.

6. The control method of any one of claims 1 to 5, wherein:
the sensing step includes
sensing the pressing operation when a contact of the user's finger is sensed;
and
the determining step includes
measuring a contact time of the user's finger and
determining whether the contact time is equal to or more than a predetermined time threshold value,
wherein when the contact time is equal to or more than the predetermined time threshold value, the pressing operation is determined as the easy press operation by recognizing that the pressing operation is continued, and when the contact time is less than the predetermined time threshold value, the pressing operation is determined as the easy click operation by recognizing that the pressing operation is temporary.

7. The control method of any one of claims 1 to 5, wherein:
the sensing step includes
sensing the pressing operation when the pointing device collects light reflected by the user's finger and the collected light amount is more than a predetermine light amount threshold value; and
the determining step includes
determining whether or not the light amount decreases from a time when the collected light amount is more than the light amount threshold value to a predetermined threshold time, and
determining the pressing operation as the easy click operation by recognizing that the pressing operation is temporary when the light amount decreases from the time when the light amount is more than the light amount threshold value to the predetermined threshold time and determining the pressing operation as the easy press operation by recognizing that the pressing operation is continued when the light amount is constant or increases from the time when the light amount is more than the light amount threshold value to the predetermined threshold time.

8. A terminal apparatus, comprising:
a display unit that displays a cursor or a pointer on a screen and outputs information depending on an operation of the terminal apparatus on the screen;
a pointing device that generates or moves the cursor (alternatively, a pointer) on the screen through movement of a user's finger; and
a control unit that senses a pressing operation of the user's finger for controlling a function displayed on the screen through the pointing device and determines whether the pressing operation is temporary or is continued for a predetermined time, implements a function linked to a region where the cursor or pointer is positioned on the screen by determining the pressing operation as an easy click operation when the pressing operation is temporary, and previously implements a predetermined control function on the screen by determining the pressing operation as the easy press operation when the pressing operation is continued for the predetermined time.

9. The terminal apparatus of claim 8, wherein:
the pointing device
generates and outputs a contact sensing signal when a physical contact of the user's finger is sensed; and
the control unit
determines the operating operation as the easy press operation by recognizing that the pressing operation is continued for the predetermined time when a contact time is equal to or more than a predetermined threshold value, and determines the pressing operation as the easy click operation by recognizing that the pressing operation is temporary when the contact time is less than the predetermined threshold value by measuring the contact time when the contact sensing signal is received.

10. The terminal apparatus of claim 8, wherein:
the pointing device
collects light reflected by the user's finger and outputs a light sensing signal;
and
the control unit
determines the pressing operation as the easy click operation by recognizing that the pressing operation is temporary when the light amount decreases from the time when the light amount is more than the light amount threshold value to the predetermined threshold time, and determines the pressing operation as the easy press operation by recognizing that the pressing operation is continued when the light amount is constant or increases from the time when the light amount is more than the light amount threshold value to the predetermined threshold time by measuring the light amount when the light sensing signal is transmitted.

11. The terminal apparatus of any one of claims 8 to 10, wherein
the control unit
outputs a plurality of additional menu items corresponding to a category of a currently activated service screen, or switches a mode of the service screen when determining the pressing operation as the easy press operation.

12. The terminal apparatus of claim 11, wherein
the control unit
configures a favorite menu on the basis of one or more menus that a user frequently uses, and outputs the favorite menu on the screen when determining the pressing operation as the easy press operation.

13. The terminal apparatus of claim 11, wherein
the control unit
outputs one or more menu items selectable through vertical scrolling and one or more menu items selectable through horizontal sweeping on the screen when determining the pressing operation as the easy press operation.

14. The terminal apparatus of claim 11, wherein
the control unit
switches one or more menu items for controlling the currently activated service displayed on the screen into a hiding mode, and when the cursor or pointer gets near to the menu items, displays a hidden menu item on the screen.
